# EUROPEAN PATENT SPECIFICATION

(11) **EP 2 865 646 B1**
(45) Date of publication and mention of the grant of the patent: **08.06.2016**
(21) Application number: 13005122.0
(22) Date of filing: 28.10.2013
(51) Int. Cl.: C01B 31/04

(54) **METHOD OF PRODUCING GRAPHENE ON A LIQUID METAL**
VERFAHREN ZUR HERSTELLUNG VON GRAPHEN AUF EINEM FLÜSSIGEN METALL
PROCÉDÉ DE FABRICATION DE GRAPHÈNE SUR UN MÉTAL LIQUIDE

(43) Date of publication of application: 29.04.2015
(73) Proprietor: Advanced Graphene Products Sp. z o. o., 65-066 Zielona Gora (PL); Politechnika Lodzka, 90-924 Lodz (PL)
(72) Inventor: Modrzyk, Wojciech, 65-012 Zielona Góra (PL); Kula, Piotr, 91-496 Lodz (PL); Rzepkowski, Antoni, 94-128 Lodz (PL); Pietrasik, Robert, 95 -060 Brzeziny (PL); Atraszkiewicz, Radomir, 92-503 Lodz (PL); Dybowski, Konrad, 26-337 Aleksandrów (PL)
(74) Representative: Passowicz, Marek

(56) References cited:
- US-A1- 2009 155 561
- D. GENG ET AL: "Uniform hexagonal graphene flakes and films grown on liquid copper surface", PROCEEDINGS OF THE NATIONAL ACADEMY OF SCIENCES, vol. 109, no. 21, 22 May 2012 (2012-05-22) , pages 7992-7996, XP055064478, ISSN: 0027-8424, DOI: 10.1073/pnas.1200339109 & D. GENG ET AL: "Supporting Information: Uniform hexagonal graphene flakes and films grown on liquid copper surface", PROCEEDINGS OF THE NATIONAL ACADEMY OF SCIENCES, vol. 109, no. 21, 16 April 2012 (2012-04-16), XP055104332, ISSN: 0027-8424, DOI: 10.1073/pnas.1200339109
- KULA PIOTR ET AL: "The growth of a polycrystalline graphene from a liquid phase", NANOTECH CONFERENCE & EXPO 2013: AN INTERDISCIPLINARY INTEGRATIVE FORUM ON NANOTECHNOLOGY, MICROTECHNOLOGY, BIOTECHNOLOGY AND CLEANTECHNOLOGY; WASHINGTON, DC, UNITED STATES; MAY 12-16, 2013, CRC PRESS, BOCARATON, FLA, USA, vol. 1, 12 May 2013 (2013-05-12), - 16 May 2013 (2013-05-16), pages 210-212, XP008167821, ISBN: 978-1-4822-0579-4

## Description

### Cross reference to related applications

This application relies on the Polish Patent Application No. P.399096, filed May 04, 2012.

### Subject matter of the invention

The present invention relates to a method for producing graphene from a liquid metal.

### State of art

Graphene, as one of the allotropic forms of carbon, is regarded as the final element of the series of polycyclic aromatic hydrocarbons. Graphene is composed of a monolayer of carbon atoms arranged in hexagonal rings which are linked to one another. Since the material is just one-atom thick, the form is referred to as a two-dimensional structure of carbon atoms packed into a hexagonal lattice. The length of the carbon-carbon bonds is ca. 1.42 Å. Carbon atoms in graphene form a flat, practically two-dimensional lattice with hexagonal cells, resembling a honeycomb pattern.

There are known graphene production methods which make use of the liquid state for graphene formation but are not based on the variable decreasing solubility of carbon in the liquid state. The method outlined in the patent application No. US 2012/0082787 relates to the formation of a graphene layer using liquid gallium. According to the method, an amorphous carbon film produced by vapour-depositing on an organic film is then transferred to a substrate of liquid gallium (or, alternatively, indium, tin or antimony), forming a graphene layer as a result of the graphitization reaction arising at the contact interface between the solid phase and the liquid phase. The other known method, presented in the patent description No. US2010/0055464, consists in that an eutectic mixture containing pure graphite and a solvent selected from Ni, Cr, Mn, Fe, Co, Ta, Pd, Pt, La and Ce releases, in the process of crystallization, graphite which is then separated into individual graphene layers. To this aim, a graphite disc is placed on a plate made, for example, of pure nickel, heated to 1500°C for 30-60 min, vacuum annealed at a pressure of 1.33⁻⁵ mbar and then cooled down slowly.

Known are also methods based on the epitaxial growth of graphene from the gaseous phase on substrates composed of metals, alloys and intermetallic phases with mono- or polycrystalline structures. The transport of carbon into the graphene layer often makes use of the variable solubility of carbon, decreasing along with temperature, in the solid state forming matrix.

Known from the patent description No. US 2011/0108609 is a method of fabricating graphene in which a layer including nickel (Ni) or a nickel-based alloy containing at least one metal from the group comprising copper (Cu), iron (Fe), gold (Au) and platinum (Pt) is saturated with carbon. Nickel-based alloys contain between 5 and 30 atomic % of Ni. The role of alloy additives is to restrict the solubility of carbon in Ni. The catalyst layer is applied in the process of evaporation to a silicon substrate coated with silica (SiO₂/Si). Stacked catalyst layers can be obtained by sputtering, evaporation or the CVD method, or by alternately stacking thin metal films atop one another, followed by annealing. The thickness of the layers varies from ca. 10 to ca. 1000 nm. In order to produce a graphene layer, hydrocarbons are supplied into the processing chamber containing a previously applied catalyst layer. Argon may also be supplied with the hydrocarbons as a carrier gas. The ratio of the mixture containing a carbon-carrying gas (usually acetylene) and argon is 1:40. During the formation of the graphene layer the temperature of the substrate can be in the range of 650°C-750°C The graphene layer is produced as a result of variable carbon solubility in the catalyst material of the substrate.

Known from the patent description No. US 2009/0155561 is a method which comprises placing a carbon material directly on a catalyst layer which, as a result of heat treatment, undergoes thermal decomposition thus becoming a source of carbon atoms for infiltrating the catalyst layer. The carbonaceous material covering the catalyst layer can be a polymer applied to the surface using a variety of coating or immersion methods or other techniques in order to create a uniform layer. The thickness of the graphene sheet produced in this manner can be controlled by the molecular weight and the quantity of applied polymer. The next stage involves heat treatment in an inert or reducing atmosphere in order to achieve thermal decomposition of the polymer. As an alternative to placing a carbonaceous material on the surface of the catalyst layer, the catalyst layer can be contacted directly with a gaseous carbon source which, according to the patent's claim, can include a compound from the group comprising carbon monoxide, ethane, ethylene, ethanol, acetylene, propane, propylene, butane, butadiene, pentane, pentene, cyclopentadiene, hexane, cyclohexane, benzene, toluene and their combinations. Carbon atoms infiltrate the catalyst layer until the solubility limit is achieved, which is when graphene nucleation occurs and graphene grows forming individual graphene sheets. A significant element of the processes is the cooling method. Catalyst layers can have a single-crystal structure and comprise a metal selected from the group consisting of Ni, Co, Fe, Pt, Au, Al, Cr, Cu, Mg, Mn, Mo, Rh, Si, Ta, Ti, W, U, V, Zr or alloys containing at least one of the foregoing metals. Since the catalyst layer is monocrystalline, it resolves the problem of defects which occurs in polycrystalline catalysts. The catalyst layer can be used on its own or, as in other methods, disposed on a silicon substrate. The method is suitable for producing between 1 and ca. 300 layers, each single layer measuring between ca. 1 mm and ca. 1000 mm.

Yet another method disclosed in the patent application No. US 2010/0255984 involves the process of carbonization of ruthenium (Ru) as a mono- or polycrystalline substrate deposited epitaxially with a plane (0001) having a hexagonal crystalline structure matched to that of the emerging graphene. According to the method, the substrate is heated to a temperature of ca. 0.5 Ttop., under reduced pressure, maintained at that temperature for several up to several dozen seconds, and then annealed in an atmosphere of ethylene at 10⁻⁵ mbar, following which Ru is cooled down to a temperature of 0.3-0.4 Ttop. at a rate of 20°C/min or lower.

The patent description No. US 2011/0033688 discloses the process of graphene growth from a gaseous phase containing acetylene or methane with argon (as a carrier gas). Similarly to the methods reported above, the catalyst is a thin layer of metal, suitable metals including nickel, cobalt, iron, copper or metal alloys (e.g. iron-nickel, nickel-chromium) applied to the substrate. The catalyst layer has an oriented polycrystalline structure with large grains, ca. 10 µm in size. The process involves the stage of heating the substrate to 800-900°C in a carbon-rich atmosphere at a pressure of 5-150 mbar, followed by sudden cooling. Cooling is performed with an inert gas, to the temperature level of 700°C or lower.

Known from the patent description No. EP 2 392 547 is a method based on graphene growth from the gaseous phase on a SiC (silicon carbide) substrate, characterized in that the process of silicon sublimation from the substrate is controlled with the flow of an inert gas - argon (or a gas other than inert) through the epitaxial reactor. The flow rate of the inert gas ranges from 6 l/min (or less) to 70 l/min, at a pressure of 10⁻⁴ mbar. The substrate becomes heated to over 1100°C during the process. The epitaxy is preceded by a stage of etching in the atmosphere of gas containing hydrogen. It may also additionally contain propane, silane or their mixtures, or other hydrocarbons. The process is conducted at various temperatures within the 1400°C-2000°C range and at a pressure of 10-1000 mbar.

The patent description No. US 2011/0206934 presents a method for producing an appropriate multilayered structure, with one of the layers constituting a source of carbon atoms. The substrate is composed of silicon coated with silica, to which amorphous carbon is applied by ion sputtering, and then hydrogenated. Alternatively, the layer comprises a metal-carbon alloy containing at least 50 atomic percent of carbon, and has a thickness in the range from 0.5 nm to 50 nm. As the next stage, a second layer composed of a metal (Co, Cu, Fe, Ir, Mo, Ni, Pd, Pt, Ru or their alloys), between 10 and 1000 nm thick, is applied to the first layer, e.g. using the PVD method. The multilayered structure is then annealed at the temperature range of 550°C-1400°C in the atmosphere of Ar/H₂ and N₂/H₂, N₂, Ar, He or in a vacuum. In this way, carbon infiltrates the metal layer, leading to the deposition of graphene.

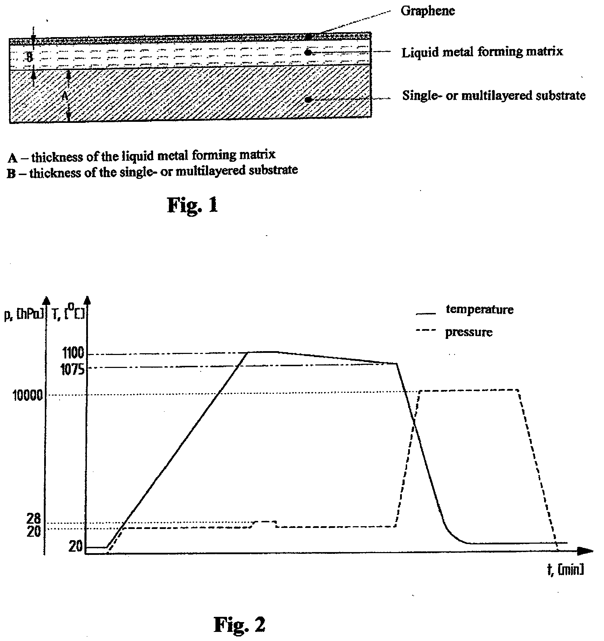

D. Geng et al, in their the publication of "Uniform hexagonal grapheme flakes and films grown on liquid copper surface", PROCEEDINGS OF THE NATIONAL ACADEMY OF SCIENCES, vol. 109, no.21, 22 May 2012 (2012-05-22), pages 7992-7996, XP055064478, ISSN: 0027-8424, DOI: 10.1073/pnas. 1200339109; & D. GENG ET AL: "Supporting Information: Uniform haexagonal graphene flakes and films grown on liquid copper surface", "PROCEEDINGS OF THE NATIONAL ACADEMY OF SCIENCES, vol. 109, no.21, 16 April 2012 (2012-04-16), XP055104332, ISSN: 0027-8424, DOI; 10.1073/pnas. 1200339109, in Fig. 2 and in section "Methods" and "Supporting Informations", teach a method of producing a grapheme layer from a liquid metal (copper) matrix on a solid metal (tungsten) substrate, wherein a multilayered plate containing as the grapheme forming matrix, an external layer composed of a metal (copper) with a melting point of 1085°C which is in the range from 1051°C and 1150°C, and as a support substrate, one layer made of transition metal (tungsten) with a melting point of 3410°C, which is in the range from 1151 °C to 3410°C, is subjected to heat treatment in the following stages:
- heating the plate to a temperature of 1120°C that is between 0.5°C and 50°C higher than the melting point of the forming matrix (copper),
- annealing, at a constant temperature for a period of 1800 seconds and supplying methane and hydrogen for 1080 seconds,
- cooling down to room temperature with a cooling rate of 25°C/min.

In turn, the paper of P. Kula et al: "The growth of a polycrystalline graphene from a liquid phase", NANOTECH CONFERENCE & EXPO 2013: AN INTERDISCIPLINARY INTEGRATIVE FORUM ON NANOTECHNOLOGY, MICROTECHNOLOGY, BIOTECHNOLOGY AND CLEANTECHNOLOGY; WASHINGTON, DC, UNITED STATES; MAY 12-16, 2013, CRS PRESS, BOCARATON, FLA, USA, Vol. 1, 12 May 2013 (2013-05-12), - 16 May 2013 (2013-05-16), pages 210-212, XP008167821, ISBN: 978-1-4822-0579-4 discloses the method of producing graphene from liquid metal with using the mixture of acetylene, ethylene and hydrogen as carburising medium in the temperature 1200°C-1250°C The monolithic plate of cooper-nickel was used as a substrate for the deposition of grapheme. However, this method limits the ability to transfer carbon and thus prevents its precise dosing.

### Nature of the invention

The essence of the graphene production method according to the present invention consists in that a multilayered plate containing, as the graphene forming matrix, an external layer composed of a metal or a metal alloy with a melting point in the range from 1051°C and 1150°C and, as a substrate, between 1 and 5 layers made of transition metals and/or their alloys and/or metalloids and/or their solutions and compounds with melting points in the range from 1151°C to 3410°C is heated, as the first stage, until the plate reaches a temperature that is between 0.5°C and 50°C higher than the melting point of the forming matrix, at which point, as the second stage, it is annealed at a constant or variable temperature from the same range for a period ranging from 60 to 600 seconds, with a concurrent supply of gases into the atmosphere - acetylene at a partial pressure of between 0 and 4 hPa, ethylene at a partial pressure of between 0 and 4 hPa and hydrogen at a partial pressure of between 0 and 2 hPa, for 10-300 seconds, whereupon, as the third stage, the plate is cooled down maintaining the cooling rate of 0.1-2°C/min within the temperature range from 1200°C to 1050°C, where consecutive stages of heating, annealing and cooling are performed in the atmosphere of pure argon at a constant partial pressure varying from 1 hPa to 1100 hPa.

Advantageously, the external metal layer is made of copper.

It is also advantageous for the graphene-forming external layer composed of a metal or a metal alloy to be between 500 and 500000 nm thick.

It is furthermore advantageous than the transition metals are selected from the group comprising platinum, palladium and nickel.

It is also advantageous that the metalloids or their compounds are selected from silicon or quartz.

In particular, it is advantageous that the platinum plate, which is at least 0.2 mm thick and coated by electrolysis on one side with a 0.2 mm thick copper layer, is placed in the chamber of a vacuum furnace, at which point, after removing air from the chamber to the vacuum level of 10⁻³ hPa, argon is supplied into the furnace chamber in such a way as to maintain the partial pressure of argon throughout the entire process at the level of 20 hPa, whereby concurrently with the commencement of argon supply the plate heating process is initiated and continued until the plate reaches 1100°C and the temperature of the plate stabilizes at this level for 2.5 min, with acetylene, ethylene, hydrogen and argon additionally supplied into the furnace chamber for 60 seconds during the period of maintaining constant temperatures until the partial pressure reaches 28 hPa, following which the plate is cooled down at a rate of 1°C/min to 1075°C, at which point rapid uncontrolled cooling to the ambient temperature is continued in the furnace chamber.

In particular, it is likewise advantageous that a molybdenum plate with a thickness of 4.5 mm and dimensions of 50x50 mm is coated by magnetron sputtering with a 40µm thick layer of nickel and then a 1.5 mm thick layer of copper and is placed in the chamber of a vacuum furnace, at which point, after removing air from the chamber to the vacuum level of 10⁻³hPa, argon is supplied into the furnace chamber in such a way as to maintain the partial pressure of argon throughout the entire process at the level of 1100hPa, whereby at the same time the plate heating process is initiated and continued until the plate reaches 1100°C and then temperature of the plate stabilizes at this level for 10 minutes, with additional hydrogen supplied into the furnace chamber for 120 seconds during the period of heating to the temperature to achieve the partial pressure of 60hPa, following which the plate is cooled down at a rate of 0.2°C/min to 1050°C, at which point rapid uncontrolled cooling to the ambient temperature is continued in the furnace chamber.

In particular, it is also advantageous that the quartz glass plate, which is at least 0.8 mm thick and coated with a 300 nm thick layer of silicon and a 1000 nm thick layer of copper, is placed in the chamber of a vacuum furnace, at which point, after removing air from the chamber to the vacuum level of 10⁻³ hPa, argon is supplied into the furnace chamber in such a way as to maintain the partial pressure of argon throughout the entire process at the level of 50 hPa, whereby after 5 minutes the plate heating process is initiated and continued until the plate reaches 1090°C and the temperature of the plate stabilizes at this level for 5 minutes, with additional gases supplied into the furnace chamber for 20 seconds during the period of maintaining constant temperature, including acetylene - to achieve the partial pressure of 2 hPa, ethylene - to reach the partial pressure of 2 hPa and hydrogen - to attain the partial pressure of 1 hPa, following which the plate is cooled down at a rate of 0.2°C/min to 1075°C, at which point rapid uncontrolled cooling to the ambient temperature is continued in the furnace chamber.

### Detailed description of the invention

The invention will be described in more detail below in conjunction with examples and a drawing in which individual figures illustrate:
Fig. 1 - cross-section of the structure of a multi-layer plate containing a graphene-forming matrix in the form of an outer layer consisting of a metal or a metal alloy and a support substrate layer, and
Fig. 2 - diagram illustrating consecutive steps of the thermal process and gas supply.

### Example 1

A platinum plate, 0.3 mm thick and measuring 10x40 mm, was coated by electrolysis on one side with a 0.2 mm thick layer of copper. The two-layer plate thus prepared was placed in the chamber of a vacuum furnace, following which air was removed from the chamber to achieve the vacuum level of 10⁻³ hPa. As the next step, argon was supplied into the furnace chamber to maintain the partial pressure of argon at the level of 20 hPa throughout the entire process. Concurrently with the commencement of argon supply into the chamber the process of plate heating was initiated and maintained until the temperature reached 1100°C, at which point the temperature of the plate was stabilized at this level for 2.5 min. As the temperature was maintained at a constant level, acetylene, ethylene, hydrogen and argon were additionally supplied into the furnace chamber for 60 seconds until the partial pressure of 28 hPa was attained. The plate cooling process was then commenced, at a rate of 1°C/min, to the temperature of 1075°C, followed by rapid uncontrolled cooling to the ambient temperature in the furnace chamber. A polycrystalline monolayer of graphene with a grain size ranging from 100 to 120 µm was ultimately identified on the copper surface. A polymethyl methacrylate film was attached to the surface of the plate and copper was selectively etched from the space between platinum and PMTM, producing a polycrystalline graphene sheet measuring 10 x 40 mm.

### Example 2

A molybdenum plate, 4,5 mm thick and measuring 50x50 mm, was coated by magnetron sputtering with a 40µm thick layer of nickel, followed by a 1.5 mm thick layer of copper. The three-layer plate thus prepared was placed in the chamber of a vacuum furnace, following which air was removed from the chamber to achieve the vacuum level of 10⁻³ hPa. As the next step, argon was supplied into the furnace chamber to maintain the partial pressure of argon at the level of 1100 hPa throughout the entire process. At the same time the process of plate heating was initiated and maintained until the temperature reached 1100°C, at which point the temperature of the plate was stabilized at this level for 10 minutes. While heating to the temperature additional hydrogen was supplied into the furnace chamber for 120 seconds to achieve the partial pressure of 60 hPa. The plate cooling process was then commenced, at a rate of 0.2°C/min, to the temperature of 1050°C, followed by rapid uncontrolled cooling to the ambient temperature in the furnace chamber. A polycrystalline monolayer of graphene with a grain size ranging from 100 to 120 µm was ultimately identified on the copper surface. A polymethyl methacrylate film was attached to the surface of the plate and copper was selectively etched from the space between platinum and PMTM, producing a polycrystalline graphene sheet measuring 40 x 40 mm.

### Example 3

A plate of quartz glass, 2 mm thick and measuring 15x40 mm, was coated by magnetron sputtering with a 300 nm thick layer of silicon, followed by a 1000 nm thick layer of copper. The three-layer plate thus prepared was placed in the chamber of a vacuum furnace, following which air was removed from the chamber to achieve the vacuum level of 10⁻³ hPa. As the next step, argon was supplied into the furnace chamber to maintain the partial pressure of argon at the level of 50 hPa throughout the entire process. After 5 minutes the process of plate heating was initiated and maintained until the temperature reached 1090°C, at which point the temperature of the plate was stabilized at this level for 5 minutes. As the temperature was maintained at a constant level, additional gases were supplied into the furnace chamber for 20 seconds: acetylene - to achieve the partial pressure of 2 hPa, ethylene - to reach the partial pressure of 2 hPa and hydrogen - to attain the partial pressure of 1 hPa. The plate cooling process was then commenced, at a rate of 0.2°C/min, to the temperature of 1075°C, followed by rapid uncontrolled cooling to the ambient temperature in the furnace chamber. A polycrystalline monolayer of graphene with a grain size ranging from 200 to 220 µm was ultimately identified on the copper surface. A polymethyl methacrylate film was attached to the surface of the plate and flat pressure was exerted on the plate to crush the quartz glass substrate, following which copper was solubilized in 1N nitric acid. A polycrystalline graphene sheet measuring 15 x 40 mm was obtained in the process.

## Claims

1. A method for producing a graphene layer from a liquid metal matrix on a solid metal or ceramic substrate with using the mixture of acetylene, ethylene and hydrogen as a carburising medium, **characterized in that** a multilayered plate containing, as the graphene forming matrix, an external layer composed of a metal or a metal alloy with a melting point in the range from 1051°C and 1150°C and, as a support substrate, between 1 and 5 layers made of transition metals and/or their alloys and/or metalloids and/or their solutions and compounds with melting points in the range from 1151°C to 3410°C, is subjected to heat treatment in the following stages:
- plate heating until the plate reaches a temperature that is between 0.5°C and 50°C higher than the melting point of the forming matrix,
- annealing, at a constant or variable temperature from the temperature range, for a period between 60 and 600 seconds, concurrently supplying the atmosphere with acetylene at a partial pressure of between 0 and 4 hPa, ethylene at a partial pressure of between 0 and 4 hPa and hydrogen at a partial pressure of between 0 and 2 hPa for a period between 10 and 300 seconds,
- cooling, partially controlled, with the cooling rate maintained between 0.1 and 2°C/min in the temperature range of 1200°C-1050°C, where consecutive stages of heating, annealing and cooling are conducted in the atmosphere of pure argon at a constant partial pressure varying from 1 hPa to 1100 hPa.

2. The method according to claim 1, **characterized in that** the external metal layer is made of copper.

3. The method according to claim 1 or 2, **characterized in that** the graphene-forming external layer of metal or metal alloy is between 500 and 500 000 nm thick.

4. The method according to claim 1 or 2 or 3, **characterized in that** platinum and/or molybdenum and/or palladium and/or nickel are used as the transition metals.

5. The method according to claim 1 or 2 or 3, **characterized in that** silicon or quartz are used as the metalloids or their compounds.

6. The method according to claim 4, **characterized in that** the platinum plate, which is at least 0.2 mm thick and coated by electrolysis on one side with a 0.2 mm thick copper layer, is placed in the chamber of a vacuum furnace, at which point, after removing air from the chamber to the vacuum level of 10⁻³ hPa, argon is supplied into the furnace chamber in such a way as to maintain the partial pressure of argon throughout the entire process at the level of 20 hPa, whereby concurrently with the commencement of argon supply the plate heating process is initiated and continued until the plate reaches 1100°C and the temperature of the plate stabilizes at this level for 2.5 min, with acetylene, ethylene, hydrogen and argon additionally supplied into the furnace chamber for 60 seconds during the period of maintaining constant temperature until the partial pressure reaches 28 hPa, following which the plate is cooled down at a rate of 1°C/min to 1075°C, at which point rapid uncontrolled cooling to the ambient temperature is continued in the furnace chamber.

7. The method according to claims 4, **characterized in that** a molybdenum plate with a thickness of 4.5 mm and dimensions of 50x50 mm is coated by magnetron sputtering with a 40µm thick layer of nickel and then a 1.5 mm thick layer of copper and is placed in the chamber of a vacuum furnace, at which point, after removing air from the chamber to the vacuum level of 10⁻³hPa, argon is supplied into the furnace chamber in such a way as to maintain the partial pressure of argon throughout the entire process at the level of 1100hPa, whereby at the same time the plate heating process is initiated and continued until the plate reaches 1100°C and then temperature of the plate stabilizes at this level for 10 minutes, with additional hydrogen supplied into the furnace chamber for 120 seconds during the period of heating to the temperature to achieve the partial pressure of 60hPa, following which the plate is cooled down at a rate of 0.2°C/min to 1050°C, at which point rapid uncontrolled cooling to the ambient temperature is continued in the furnace chamber.

8. The method according to claim 5, **characterized in that** a quartz glass plate, which is at least 0.8 mm thick and coated with a 300 nm thick layer of silicon and a 1000 nm thick layer of copper, is placed in the chamber of a vacuum furnace, at which point, after removing air from the chamber to the vacuum level of 10⁻³ hPa, argon is supplied into the furnace chamber in such a way as to maintain the partial pressure of argon throughout the entire process at the level of 50 hPa, whereby after 5 minutes the plate heating process is initiated and continued until the plate reaches 1090°C and the temperature of the plate stabilizes at this level for 5 minutes, with additional gases supplied into the furnace chamber for 20 seconds during the period of maintaining constant temperature: acetylene - to achieve the partial pressure of 2 hPa, ethylene - to reach the partial pressure of 2 hPa and hydrogen - to attain the partial pressure of 1 hPa, following which the plate is cooled down at a rate of 0.2°C/min to 1075°C, at which point rapid uncontrolled cooling to the ambient temperature is continued in the furnace chamber.

## Patentansprüche

1. Verfahren zur Herstellung von der Schicht des Graphens aus der Matrize der Schmelze auf der festen Metall-, oder Keramikunterlage, mit dem Gebrauch des Gemisches von Acetylen, Ethylen und Wasserstoff als Carrier der Kohle, **dadurch gekennzeichnet, dass** die Platte in Schichten, die als die Graphen formulierende Matrize enthält: die äußere Schicht des Metalls oder der Metalllegierung, von der Schmelztemperatur im Bereich von 1051°C bis zu 1150°C und als Unterlage, von 1 bis 5 Schichten der temporären Metalle und/oder ihrer Legierungen und/oder der Metalloide und/oder ihrer Lösungen und der Verbindungen von der Schmelztemperatur im Bereich von 1151°C bis zu 3410°C, werden in folgenden Etappen thermisch verarbeitet:
- die Erhitzung der Platte bis zum Moment des Erreichens der Temperatur von 0,5°C bis zu 50°C über der Schmelztemperatur der formulierenden Matrize.
- die Erhitzung in der festen oder veränderlichen Temperatur aus diesem Bereich durch die Periode von 60 bis zu 600 s, dabei wird Acetylen in die Atmosphäre beim Partialdruck von 0 bis zu 4 hPa dosiert, Ethylen beim Partialdruck von 0 bis zu 4 hPa und Wasserstoff beim Partialdruck von 0 do 2 hPa durch die Periode von 10 bis zu 300 s.
- die teilweise kontrollierte Abkühlung, während deren sich die Geschwindigkeit der Abkühlung im Bereich von 0,1 bis zu 2°C/min im Bereich der Temperaturen von 1200°C bis zu 1050°C hält, wobei die einzelnen Etappen der Erwärmung, Erhitzung und Abkühlung in der Atmosphäre des reinen Argons bei dem festen Partialdruck von 1 hPa bis zu 1100 hPa durchgeführt werden.

2. Verfahren nach Anspruch 1, **dadurch gekennzeichnet, dass** die äußere Metallschicht aus Kupfer hergestellt ist.

3. Verfahren nach einem der Ansprüche 1 oder 2, **dadurch gekennzeichnet, dass** die äußere Schicht vom Metall oder Metalllegierung, die Graphen formuliert, die Dicke von 500 bis zu 500 000 nm hat.

4. Verfahren nach einem der Ansprüche 1 bis 3, **dadurch gekennzeichnet, dass** als temporäre Metalle Platin und/oder Molybdän und/oder Palladium und/oder Nickel verwendet werden.

5. Verfahren nach einem der Ansprüche 1 bis 3, **dadurch gekennzeichnet, dass** als Metalloide oder ihre Verbindungen Silicium oder Quarz verwendet werden.

6. Verfahren nach Anspruch 4, **dadurch gekennzeichnet, dass** die Platinplatte mit der Dicke mindestens 0,2 mm, die mit der Kupferschicht mit der Dicke 0,2 mm einseitig elektrolytisch bedeckt ist, in den Raum des Vakuumofens gelegt wird. Nach dem Abpumpen der Luft aus dem Ofenraum bis zum Niveau des Vakuums 10⁻³ hPa, beginnt die Dosierung von Argon in den Ofenraum so, dass sich durch die ganze Zeit der Partialdruck von Argon 20 hPa hält. Gleichzeitig beginnt mit der Dosierung von Argon und wird die Erwärmung der Platte bis zur Temperatur 1100 °C fortgesetzt, bis zum Stabilisieren der Temperatur der Platte auf diesem Niveau durch die Periode 2,5 min, wobei während des Erhaltes der festen Temperatur in den Ofenraum zusätzlich durch 60 s dosiert werden: Acetylen, Ethylen, Wasserstoff und Argon, bis zum Erreichen des Partialdruckes 28 hPa, anschließend wird die Platte mit der Geschwindigkeit 1°C/min bis zur Temperatur 1075°C abgekühlt. Weiter wird eine schnelle, unkontrollierte Abkühlung zur Temperatur der Umgebung im Ofenraum fortgesetzt.

7. Verfahren nach Anspruch 5, **dadurch gekennzeichnet, dass** die Platte des Molybdäns mit der Dicke 4,5 mm und mit der Größe 50x50 mm einseitig mit der Magnetronmethode des Versprühens mit der Nickelschicht mit der Dicke 40 µm bedeckt wird. Anschließend wird es mit der Kupferschicht mit der Dicke 1,5mm bedeckt. Anschließend wird so vorbereitete, dreiwertige Platte in den Raum des Vakuumofens gelegt. Anschließend wird die Luft aus dem Ofenraum bis zum Niveau des Vakuums 10⁻³ hPa abgepumpt. Danach beginnt die Dosierung von Argon in den Ofenraum so, dass der Partialdruck 1100hPa von Argon durch den ganzen Prozess gehalten wird. Gleichzeitig beginnt und wird mit dem Beginn von der Dosierung des Argons in den Ofenraum die Erhitzung der Platte bis zur Temperatur 1100°C fortgesetzt. Die Temperatur wird auf diesem Niveau durch die Periode von 10 min stabilisiert. Dabei wird Wasserstoff in den Ofenraum durch 120 s bis zum Partialdruck 60 hPa während der Erhitzung der Platte dosiert. Anschließend wird die Platte mit der Geschwindigkeit 0,2°C/min bis zur Temperatur 1050°C abgekühlt. Danach wird eine unkontrollierte Abkühlung bis zur Temperatur der Umgebung fortgesetzt.

8. Verfahren nach Anspruch 4, **dadurch gekennzeichnet, dass** die Platte des Quarzglases mit der Dicke mindestens 0,8 mm, die mit der Siliciumschicht mit der Dicke 300 nm und mit der Kupferschicht mit der Dicke 1000 nm bedeckt ist, in den Raum des Vakuumofens gelegt wird. Anschließend beginnt die Dosierung von Argon in den Ofenraum nach dem Abpumpen der Luft bis zum Niveau des Vakuums 10⁻³ hPa so, dass durch den ganzen Prozess der Partialdruck von Argon 50 hPa gehalten wird. Nach 5 Minuten beginnt die Erwärmung der Platte bis zur Temperatur 1090°C, bis zur Stabilisierung der Temperatur der Platte auf diesem Niveau durch 5 min. Während des Erhaltes des festen Temperatur wird Acetylen durch 20 s bis zum Partialdruck 2 hPa dosiert. Danach Ethylen bis zum Partialdruck 2 hPa und Wasserstoff bis zum Partialdruck 1 hPa. Anschließend beginnt die Abkühlung der Platte mit der Geschwindigkeit 0,2°C/min bis zur Temperatur 1075°C. Danach wird eine schnelle, unkontrollierte Abkühlung bis zur Temperatur der Umgebung im Ofenraum fortgesetzt.

## Revendications

1. Procédé de production d'une couche de graphène à partir de la matrice de métal liquide sur un substrat solide en métal ou en céramique en utilisant un mélange d'acétylène, de l'éthylène et de l'hydrogène comme le porteur de carbone, est **caractérisé en ce que** la plaque multicouche, comprenant, comme la matrice qui forme le graphène, la couche externe de métal ou d'alliage métallique au point de fusion entre 1051°C et 1150°C, et, comme le substrat, de 1 à 5 couches des métaux de transition et/ou des alliages de ceux-ci et/ou métalloïde et/ou de leurs solutions et composés ayant un point de fusion entre 1151°C et 3410°C, est traitée thermiquement aux étapes suivantes:
- le chauffage de la plaque jusqu'à ce qu'elle atteigne une température de 0,5°C à 50°C au-dessus du point de fusion de la matrice formant,
- le recuit à une température constante ou variable de cette gamme pendant une période de 60 à 600 secondes, en dosant dans l'atmosphère l'acétylène de pression partielle de 0 à 4 hPa, l'éthylène de pression partielle de 0 à 4 hPa et l'hydrogène de pression partielle de 0 à 2 hPa pendant une période de 10 à 300 secondes,
- le refroidissement partiellement contrôlé, pendant laquelle, on maintient la vitesse du refroidissement de 0,1 à 2°C/min (dans la gamme de température de 1200°C à 1050°C), où les étapes différentes du chauffage, du recuit et du refroidissement sont effectuées dans une atmosphère d'argon pur de la pression constante de 1 hPa à 1100 hPa.

2. Procédé selon la revendication 1 est **caractérisé en ce que** la couche externe de métal est réalisée en cuivre.

3. Procédé selon la revendication 1 ou 2 est **caractérisé en ce que** la couche externe de métal ou d'alliage métallique, qui forme le graphène, a une épaisseur de 500-500 000 nm.

4. Procédé selon la revendication 1, 2 ou 3, est **caractérisé en ce que** les métaux de transition utilisés sont: le platine et/ou le molybdène et/ou le palladium et/ou le nickel.

5. Procédé selon la revendication 1, 2 ou 3, est **caractérisé en ce que** le silicium ou le quartz est utilisé comme les métalloïdes et leurs composés.

6. Procédé selon la revendication 4, est **caractérisé en ce que** la plaque de platine ayant une épaisseur d'au moins 0,2 mm revêtu électrolytiquement d'un côté d'une couche de cuivre ayant une épaisseur de 0,2 mm est placée dans le four sous vide, puis après l'évacuation d'air de la chambre au niveau sous vide de 10⁻³ hPa, on commence à doser l'argon dans la chambre du four afin de maintenir une pression partielle d'argon de 20 hPa. Avec le début du dosage d'argon, le chauffage de la plaque à la température 1100°C est commencé et continué, jusqu'à la stabilisation de la température de la plaque à ce niveau pendant une période de 2,5 min, tout en maintenant la température, on dose dans la chambre de four (pendant une période de 60 secondes) l'acétylène, l'éthylène, l'hydrogène et l'argon, jusqu'à ce qu'une pression partielle atteigne 28 hPa, puis on refroidit la plaque à la vitesse de 1°C/min à une température de 1075°C et on continue le refroidissement rapide et incontrôlé dans la chambre du four à la température ambiante.

7. Procédé selon la revendication 5, est **caractérisé en ce que** la plaque de molybdène ayant une épaisseur de 4,5 mm et les proportions de 50x50 mm est couverte d'un côté, par pulvérisation magnétronique d'une couche de nickel ayant une épaisseur de 40 µm, puis d'une couche de cuivre ayant une épaisseur de 1,5 mm, et la plaque ainsi préparée à trois couches est placée dans une chambre de four sous vide. À l'étape suivante, on évacue l'air au niveau sous vide de 10⁻³ hPa et on commence à doser l'argon dans la chambre du four afin de maintenir la pression partielle de l'argon de 1100 hPa. Avec le début du dosage d'argon dans la chambre, le chauffage est commencé jusqu'à ce que la température atteigne 1100°C et elle est stabilisée à ce niveau pendant 10 minutes. Pendant ce chauffage de la plaque, on dose (pendant une période de 120 secondes) l'hydrogène jusqu'à ce que la pression partielle atteigne 60 hPa, puis on refroidit la plaque à la vitesse de 0,2°C/min jusqu'à la température de 1050°C et ensuite on continue un refroidissement incontrôlé dans la chambre du four à la température ambiante.

8. Procédé selon la revendication 4, est **caractérisé en ce que** la plaque de verre de quartz ayant une épaisseur d'au moins 0,8 mm, avec une couche de silicium d'une épaisseur de 300 nm et une couche de cuivre ayant une épaisseur de 1000 nm, est placée dans le four sous vide. Puis on évacue l'air de la chambre au niveau sous vide de 10⁻³ hPa, on commence à doser l'argon dans la chambre du four afin de maintenir une pression partielle d'argon de 50 hPa. Ensuite, après cinq minutes, on commence le chauffage de la plaque jusqu'à ce que la température atteigne 1090°C, jusqu'à la stabilisation de la température pendant une période de 5 minutes, dans lequel, tout en maintenant la température constante, on dose (pendant une période de 20 secondes) l'acétylène, jusqu'à ce que la pression partielle atteigne 2 hPa, l'éthylène jusqu'à ce que la pression partielle atteigne 2 hPa, et l'hydrogène jusqu'à ce que la pression partielle atteigne 1 hPa, puis on commence le refroidissement de la plaque à la vitesse de 0,2°C/min, à la température de 1075°C et on continue le refroidissement rapide et incontrôlée dans la chambre du four à la température ambiante.
